Europäisches Patentamt

European Patent Office

Office européen des brevets

(19)

(11) Publication number : **0 478 239 A1**

# EUROPEAN PATENT APPLICATION

(12)

(21) Application number : 91308595.7

(22) Date of filing : 20.09.91

(51) Int. Cl.⁵ : **B23B 29/034**

(30) Priority : **24.09.90 US 586814**

(43) Date of publication of application :
**01.04.92 Bulletin 92/14**

(84) Designated Contracting States :
**CH DE ES FR GB IT LI**

(71) Applicant : **Lohner, KLaus
c/o Kaiser Precision Tooling Inc., 641 Fargo
Avenue
Elk Grove Village, IL 60007 (US)**

(72) Inventor : **Lohner, KLaus
c/o Kaiser Precision Tooling Inc., 641 Fargo
Avenue
Elk Grove Village, IL 60007 (US)**

(74) Representative : **Carpenter, David et al
MARKS & CLERK Alpha Tower Suffolk Street
Queensway
Birmingham B1 1TT (GB)**

(54) **Boring head tool cartridge and cartridge mounting arrangement.**

(57)    A fine adjustment cartridge mechanism for a boring machine comprises a cartridge body (26) adapted to be secured within a machine tool boring head cylindrical aperture (13). A tool carrier (30) is disposed inside the cartridge body (26) for translational motion within the cartridge body (26) along the aperture axis (A), and is adapted to carry a cutting tool. A nut (68) is formed in situ within the tool carrier (30) and has a female thread (66) formed inside. A micrometer screw (62) mates with the female nut thread (66), and a bearing (80) engages the micrometer screw (62) and the cartridge body (26) to permit screw rotation but prohibit screw axial translation. The cartridge (26) also includes a collar member (36) carrying a tool insert (22) and adapted to be affixed to the tool carrier (30). A clamp screw (38) is adapted to threadably engage the carrier member (30) and is provided with a male conical head undersurface (52) adapted to engage the collar member (36) along at least part of a circular contact line. The invention also involves a method of forming the threaded nut (68) for use with a cartridge tool carrier (30) and a micrometer screw (62). Another part of the method invention involves connecting a micrometer screw bearing (80) to the tool cartridge body (26) by forming in situ a bearing shear ring (82).

EP 0 478 239 A1

FIG. 3

This invention relates to machine tools, and more particularly concerns a cartridge for a boring machine tool head. The cartridge mounts a tool insert in any of a range of locations by an adjustment mechanism in the cartridge. Play or backlash in the adjustment mechanism is virtually eliminated, so the tool insert can be located with utmost precision and a workpiece bore of desired diameter can be formed with corresponding exactness.

boring machines have long been used to form holes or apertures of extended diameters. Modern boring machines are often operated at high speeds, and the boring tools must be mounted with great stiffness and accuracy so that workpiece apertures can be formed with great precision and accuracy.

Some machine tool boring heads are provided with cartridge-like devices disposed transversely of the tool head axis of rotation. These cartridges are firmly secured in the boring tool head. In turn, a cartridge mounts a machine tool bit or tool insert. One such arrangement is shown in U.S. Patent 4,398,854.

It is the general object of the present invention to provide a boring machine tool holder having a tool-holding cartridge by which the position of a mounted tool insert can be adjusted very precisely.

It is another object of the invention to provide a boring machine tool-holding cartridge in which the tool position-adjusting cartridge mechanism is free of play or backlash.

Yet another object is to provide a tool insert-mounting cartridge which holds the tool insert with great precision and stiffness.

Still another object is to provide such a cartridge which can be manufactured easily, quickly and inexpensively.

A further object is to provide such a cartridge which will provide rugged service over a long life, and which can be repaired quickly and easily.

Other objects and advantages of the invention will become apparent upon reading the following detailed description and upon reference to the drawings. Throughout the drawings, like reference numerals refer to like parts.

## Summary of the Invention:

To meet these objectives, the invention is embodied in a fine adjustment cartridge mechanism for a boring machine or like device, the cartridge mechanism being adapted for installation in a cylindrical aperture defined in a machine tool boring head. The boring head aperture has an aperture axis extending transversely of or at an angle to a longitudinal axis of rotation of the machine tool boring head. The cartridge mechanism comprises a cartridge body adapted to be secured within the machine tool boring head cylindrical aperture. A tool carrier is disposed inside the cartridge body for translational motion within the cartridge body along the aperture axis, and is adapted to carry a cutting tool. A nut is formed in situ within the tool carrier and has a female thread formed inside. The nut may be formed of an epoxy resin. A micrometer screw having a male-threaded shank mates with the female nut thread, and a bearing engages the micrometer screw and the cartridge body to permit screw rotation but prohibit screw axial translation. The cartridge also includes a collar member with a hooklike ramp carrying a tool insert and adapted to be affixed to the tool carrier. The collar is at least partly defined by a generally conical convexly curved female surface. A clamp screw is adapted to threadably engage the carrier member and is provided with a male conical head undersurface adapted to engage the collar member along at least part of a circular contact line. The forces resulting from tightening the screw securely clamp and hook the insert holder to the tool carrier.

The invention also involves a method of forming the threaded nut for use with a cartridge tool carrier and a micrometer screw. The method comprises the steps of fixing an axially extending tool carrier member in a jig, fixing a micrometer screw having a threaded shank in the jig in a location coaxial with and at least partially within the tool carrier member, introducing a fluid material inside the tool carrier member and around the threaded micrometer screw shank, allowing the fluid to solidify into a threaded nut member, and removing the tool carrier, nut and micrometer screw assembly from the jig. Another part of the method invention involves connecting a micrometer screw bearing to the tool cartridge body. This comprises the steps of fixing a cartridge body in a jig, installing an axial bearing in the cartridge body in a predetermined location, introducing a fluid material into mating recesses formed in the body and bearing, allowing the fluid to solidify into a shear ring, and removing the cartridge body, shear ring and axial bearing assembly from the jig.

## Brief Description of the Drawings:

FIGURE 1 shows a boring machine tool head having a cartridge embodying the present invention mounted therein;

FIG. 2 is an end or developmental view taken substantially in the plane of line 2-2 in FIG. 1 and showing the end of the tool head, a typical tool insert and portions of the tool-mounting cartridge;

FIG. 3 is a sectional view of the cartridge and associated tool head parts taken substantially in the plane of line 3-3 in Fig. 2;

FIG. 4 is a fragmentary view in partial section showing the cartridge mounted in the machine tool boring head;

FIG. 5 is a fragmentary sectional view taken substantially in the plane of line 5-5 in Fig. 4 and showing the arrangement by which the cartridge is mounted in the machine tool boring head;

FIG. 6 is a sectional view taken substantially in the plane of line 6-6 in Fig. 3 and showing the machine tool boring head cartridge in further detail; and

FIG. 7 is an elevational view, in somewhat schematic form, showing a jig and associated cartridge parts as they appear during the formation of the nut and other parts of the cartridge assembly.

## Detailed Description of the Preferred Embodiment of the Invention

While the invention will be described in connection with a preferred embodiment, it will be understood that it is not intended to limit the invention to this embodiment. On the contrary, it is intended to cover all alternatives, modifications and equivalents as may be included within the spirit and scope of the invention as defined by the appended claims.

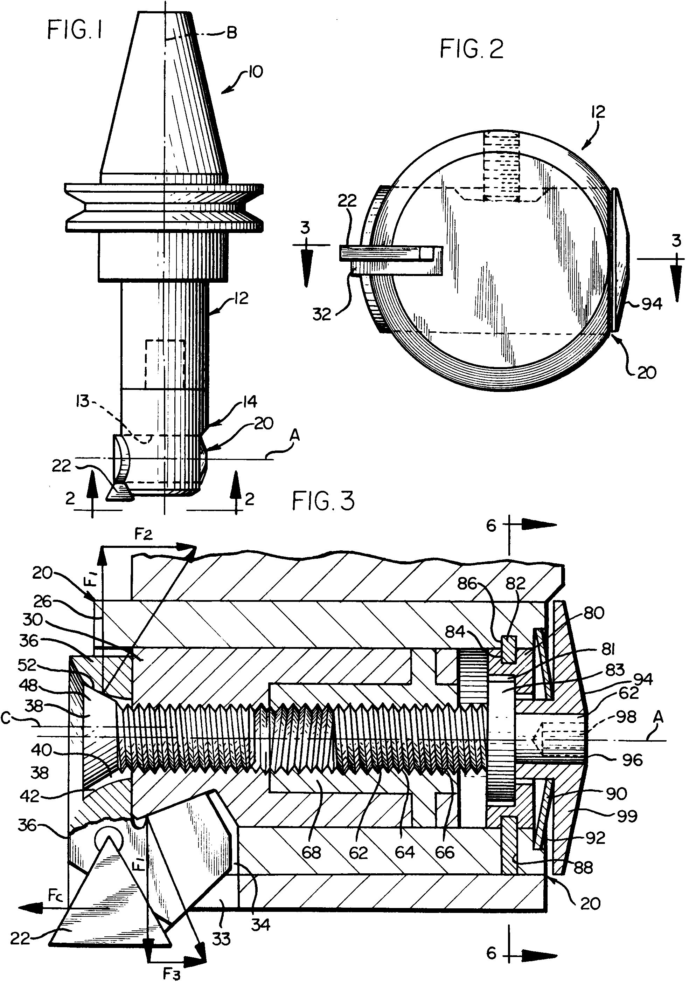

Turning first to Fig. 1, there is shown a machine tool boring head 10 having a shank 12 which mounts, at its free end, a head 14. In a transverse bore 13 extending along axis A is a novel fine adjustment device or cartridge 20 to which is affixed a tool insert 22.

The radial position of this insert 22 relative to the axis of rotation B of the tool head 10 can be adjusted with great precision in accordance with the invention. Put another way, the position of the insert 22 can be varied infinitely but very precisely through a range of positions extending along the transverse axis A, as suggested by Fig. 3. To this end, the insert-mounting cartridge 20 comprises a body 26 adapted to be secured within the machine tool boring head 12 and transverse bore 13, as explained below. A tool carrier 30 is disposed inside the cartridge body 26 for translational motion within the cartridge body in opposite directions generally parallel to the aperture axis A and perpendicular to the longitudinal axis of rotation B of the boring tool head (Fig. 1).

As shown in Fig. 2, the boring tool insert 22 is affixed to a backing 32 which is part of an insert holder collar 36 (Fig. 3). A clamp screw 38 secures this collar 36 to the carrier 30. The insert 22 and backing 32 extend for sliding motion through slots 33, 34 formed in the cartridge body 26 and carrier 30, respectively.

The insert 22 is mounted and located with great precision and rigidity. This is accomplished by forming in the collar 36 an aperture 40 which is offset with respect to the axis A and through which the clamp screw 38 extends for threaded engagement with the tool carrier 30. The aperture 40 is defined by a generally conical female surface 42, but that surface more specifically has a convexly curved shape (Fig. 3). The clamp screw head 48 is provided with a male conical head undersurface 52 adapted to engage the collar of the female surface 42 along at least part of a circular contact line. However, because the centerline C of the aperture 40 is offset from the axis A of the screw 38 and aperture 13, the screw 38 and collar 36 engage each other along only a segment of a curved contact line. This arrangement has been found to provide screw-collar interengagement of great security, and the insert holder 22 is thus mounted with great strength, rigidity and precision on the cartridge 20 and head 12.

As indicated above, the insert holder 32 includes a collar 36 defining an essentially tapered hole 40. The centerline C of this hole 40 is offset to the centerline A of the clamp screw, the tapered head of which engages one side of the tapered hole. The resulting force component $Pa$ clamps the insert holder against the tool carrier. The other resulting force component $Pt$ pulls the insert holder into the inclined plane "R" of the hook, forming a force $Pr$ which acts against centrifugal force $Pc$. The Ramp R thus acts as a hook securely holding the insert holder in place even during high rotational speed.

As those skilled in the art will understand, the diameter of the bore being formed by motion of the tool insert 22 is controlled by the location of that insert 22 relative to the axis of rotation B of the tool head 12, as suggested in Fig. 1. This radial position of the tool insert 22 can be adjusted by adjusting the axial location of the tool carrier 30 and rigidly connected collar 36, screw 38, and insert 22 relative to the cartridge body 20. This adjustment is accomplished by an adjusting mechanism 60 shown particularly in Fig. 3.

The tool carrier 30 carries the insert 22 and backing 32, and it is disposed inside the cartridge body 20 for sliding or translational motion within the cartridge body in a direction generally parallel to the aperture axis A. The tool carrier 30 can be translatably moved within the cartridge body 26 by means of a micrometer vernier screw or adjustment device 62. This micrometer screw 62 is provided with shank male threads 64 which are turned within mating female threads 66 formed in a nut 68 affixed within the carrier 30.

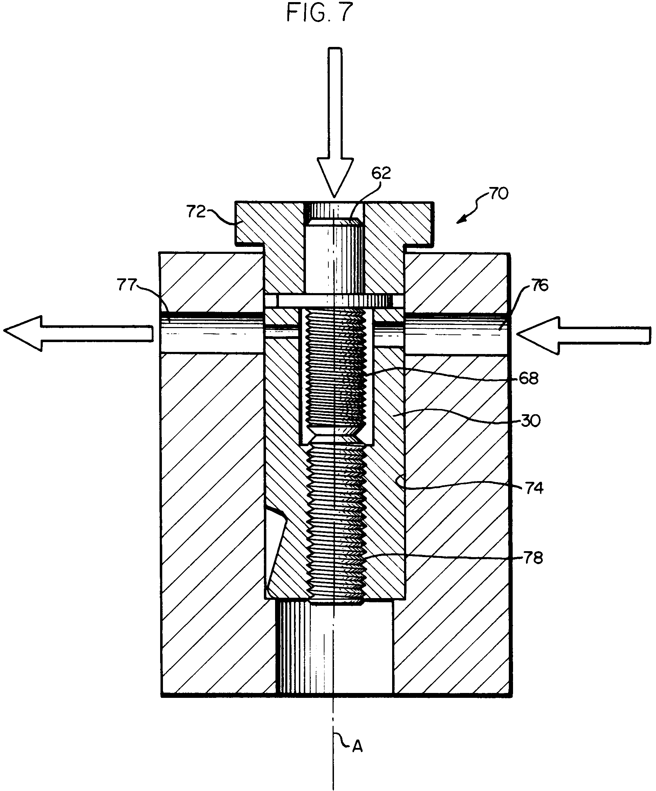

Unwanted play or backlash does not occur as the screw 62 is turned within the nut 68. To accomplish this, the nut 68 is formed in situ within the tool carrier 30 when the device is manufactured. In this way, the male screw threads 64 mate virtually perfectly with the nut female threads 66, so that no play and backlash is permitted. Moreover, the male and female threads engage along fully formed internested surfaces extending completely between the major and minor diameters of the threads. This full engagement between male and female thread cannot be obtained with machining or other methods. The formation of this nut 68 and its female threads 66 can be effectively and efficiently accomplished by the utilization of a jig 70 as shown in Fig. 7. The micrometer screw member 62 is temporarily located and fixed, as by means of a cap 72, in a position coaxial with the axis A of the carrier 30, also temporarily located in the jig. The jig 70 is provided with a carrier-supporting annular wall 74, and that wall 74 is provided, in turn, with one or more apertures 76, 77. Through an aperture 76 is poured a liquid or fluid material, and the material fills the space inside the tool carrier 30 so as to flow over and around the male threads 64 formed on the shank of the micrometer screw 62, and out the aperture 77. This fluid material is allowed to solidify so as to form the nut member 68 and nut-immobilizing arms 67 in the carrier 30. No release agent is applied between the nut 68 and the carrier 30, so the nut 68 thus formed within the carrier 30 is secured against rotation within the carrier 30 by the close carrier-nut interfitment developed during casting and by the radially extending and solidified arms 67 of the nut 68. When the nut 68 has solidified, the tool carrier 30, nut 68 and micrometer screw 62 are removed as a completed assembly from the jig 70. The micrometer screw 62 can be easily turned into and out of the newly-formed nut 68 if the screw threads 64 are treated with a known release agent before the nut 68 is formed.

A threaded plug 78 can be turned into the carrier 30 in place of the collar screw 38 to form an open end to the nut 68 as also suggested in Fig. 7. The open nut thus formed permits easy access to the spindle for lubrication purposes.

In carrying out this aspect of the invention, the nut can be effectively formed from a MOGLISS brand molybdenum sulfide-containing resin epoxy material sold by the J.L. Devitt Machinery Company, Inc., 4009 Market Street, Ashton, Pennsylvania 19014-3140. This material, when solidified, provides great strength and rigidity and retains the formed female threads with great memory and exactness. Alternatively, babbitt material or other known compositions could be used. As noted above, the screw threads 64 can be treated with a release agent before the nut is formed so as to make easy the initial nut-screw rotation which frees the nut 68 and screw threads 64 from immobilization with one another.

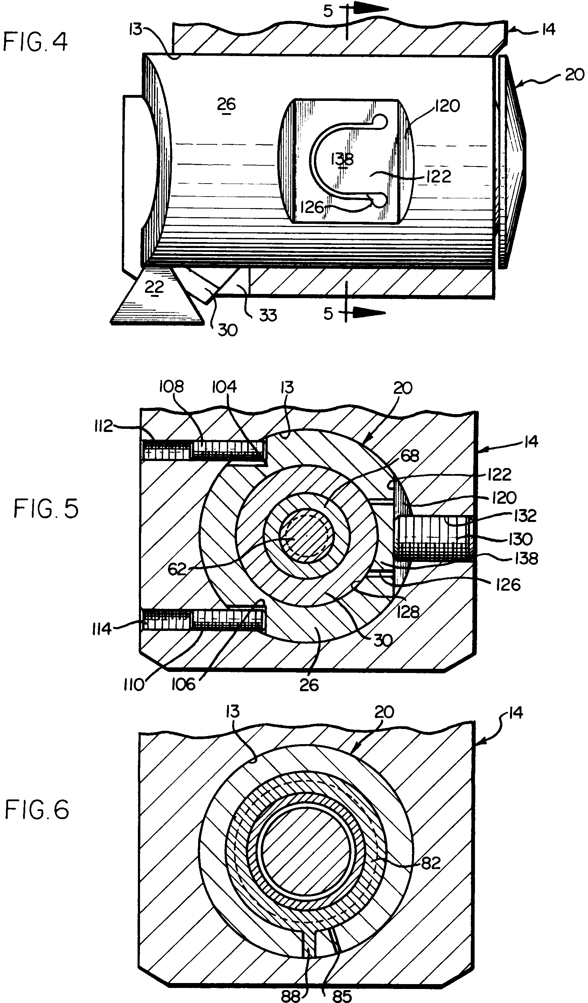

To eliminate axial play or backlash between the micrometer screw 62 and the cartridge body 26 in accordance with another aspect of the invention, a bearing element 80 is functionally located between the micrometer screw 62 and the cartridge body 26 by a shear ring 82 in such a way that no backlash or inter-part play will occur. As shown in Fig. 3, the bearing 80 has a flange or seat 81 which engages a micrometer screw collar 83 radially extending from the shank of the screw 62. To accomplish this, the carrier 30, nut 68 and micrometer screw assembly is inserted into the cartridge body 26 during cartridge manufacturing. The annular axial bearing 80 is then located within the body 26 in the general position shown in Fig. 3. This axial bearing 80 is provided with an annular groove 84 which axially mates with a confronting groove 86 formed in the cartridge body 26. A sprue or fluid-introducing hole 88 is provided at at least one position in and on the cartridge body 26, and this hole 88 communicates with the confronting grooves, again as suggested in Fig. 3. A fluid material is introduced through this hole 88, and the fluid is allowed to solidity so as to form a shear ring 82 bridging the body 26 and bearing 80. Air escapes from the body 26 through bleed holes 85 (Fig. 6) as the material is introduced into the space formed by the confronting grooves. The shear ring material can be the MOGLISS molybdenum sulfide epoxy material discussed above, or it can be babbiting material or other suitable material.

After the shear ring 82 has been formed, a conical or tinnerman retention spring 90 or other biasing means is emplaced adjacent the bearing 80 in an annular seat 92 formed within the cartridge body 20. An indicator dial head or dial 94 is then secured, as by a press fit, over an extension 96 of the micrometer screw 62. A hexagonal recess 98 in the extension 96 is adapted to matingly receive an Allen wrench or like device to permit the micrometer screw 62 to be rotated so as to consequently adjust the position of the tool insert 22. Tool insert-location indicia such as numerals can be provided along the outer face 99 of the dial 94.

As can be envisioned from Fig. 3, the retention spring 90 tends to urge the dial 94 and affixed micrometer screw 92 to the right, so that the micrometer screw collar 83 engages the axially-inwardly-extending seat 81 of the bearing 80. In this manner, the axial location of the micrometer screw 62 is precisely defined and maintained.

In accordance with another aspect of the invention, the entire cartridge assembly 20 is accurately and rigidly secured against movement within the aperture 13 in the boring tool head 14. To this end, the cartridge body 26 is provided withgenerally opposed recesses 100, 102 as shown in Fig. 5. These recesses terminate in flats 104, 106 adapted to be engaged by set screws 108-110. The set screws are each turned down threaded bores 112, 114 formed in the tool head 14, as shown in Fig. 5 until they each seat tightly against the flats 104, 106. Thus, as can be envisioned, the cartridge body 26 is rigidly secured within the tool head 14 in a fixed axial and angular position.

Opposite these body recesses 100, 102 is another recess 120 at least partially defined by a flat surface 122. As especially shown in Figs. 4 and 5, a generally U-shaped slot 126 is cut entirely through the cartridge body 26 from the outer flat surface 122 to an inner surface 128 which abuts and mates with the tool carrier 30. A set screw 130 is threaded into a mating bore 132 formed in the boring head 14. When the set or jam screw 130 is tightened into the position shown in Fig. 5, a flap-like portion 138, formed by the slot 126, is forced into a tight frictional engagement with the tool carrier 30, thereby securing the carrier 30 against rotational or translational motion within the body 26. Operationally induced vibration and tool forces will not dislodge the cartridge body 26 or move it from its secured position during boring machine operations. During part formation, the flap-like portion remains attached on one side to the cartridge body. Hence, when locking or unlocking the screw 130, neither rotation of the screw nor the tightening force involved can create any effects changing the axial position of tool carrier 30 or insert. Therefore, locking and unlocking of the jam screw has no effect on the selected tool location or corresponding dial setting.

When a machine tool operator desires to adjust the location of the tool insert 22, he first slightly loosens the jam screw 130 so as to permit the carrier meember 30 to move translationally, but not rotationally, relative to the cartridge body 26, as can be envisioned by Fig. 5. As explained above, the carrier 30 cannot rotate or turn within the cartridge body 26 because the tool insert 22 and backing 32 extend through the slot 33 formed in the immobilized cartridge body 26. The machine tool operator then inserts an Allen wrench into the micrometer screw recess 98 and turns that screw 62 in the desired direction. This screw motion 62 translatably moves, in turn, the unitized nut 68 and carrier body 30. This motion correspondingly relocates the insert-carrying collar 36, the securing screw 38, and the insert 22 itself with great precision. When the correct tool insert position has been obtained as indicated by the dial 94, the tool operator turns the jam screw 130 into the flap 138 to immobilize all the cartridge parts and affix the tool insert 22 in the desired position with great exactness, stiffness and rigidity.

## Claims

1. A fine adjustment cartridge mechanism for a boring machine or like device, the cartridge mechanism being adapted for installation in a cylindrical aperture (13) defined in a machine tool boring head (10), the aperture (13) having an aperture axis (A) extending transversely of a longitudinal axis (b) of the machine tool boring head (10), the cartridge mechanism comprising, in combination, a cartridge body (26) adapted to be secured within the machine tool boring head cylindrical aperture (13) and mounting a tool insert (22), a tool carrier (30) disposed inside the cartridge body (26) for translational motion within the cartridge body (26) generally parallel to the aperture axis (A) and adapted to carry a cutting tool, a nut (68) formed in situ within the tool carrier (30) and having a female thread (66) therein, a micrometer screw (62) having a male-threaded shank (64) mating with the female nut thread (66), and a bearing (80) engaging the micrometer screw (62) and the cartridge body (26) to permit screw rotation but prohibit screw axial translation in at least one direction generally parallel to the aperture axis.

2. A mechanism according in claim 1 further including a shear ring (82) interposed between said cartridge body (26) and said micrometer screw (62).

3. A mechanism according to claim 2 wherein said shear ring (82) is formed in situ.

4. A mechanism according to claim 3 wherein said shear ring (82) is formed in situ of an epoxy material.

5. A mechanism according to claim 4 wherein said epoxy material contains molybdenum sulfide.

6. A mechanism according to any one of the preceding claims wherein said nut (68) is formed of an epoxy resinous material.

7. A mechanism according to claim 6 wherein said epoxy material contains molybdenum sulfide.

8. A mechanism according to any one of the preceding claims further including a dial element (94) affixed to said micrometer screw (62) for indicating a translational position of the tool insert (22).

9. A mechanism according to claim 8 wherein said dial element (94) is affixed to said micrometer screw (62) by a press fit.

10. A mechanism according to claim 8 or 9 further including a retention spring member (90) functionally interposed between said dial element (94) and said cartridge body (26) to prohibit screw translational motion in a direction opposite to the translational motion opposed by said bearing (80) and to avoid translational clearance and backlash.

11. A mechanism according to any one of the preceding claims further including an insert holder collar (36) and a clamp screw (38), the collar (36) carrying the tool insert (22) and having an aperture (40) through which the clamp screw (38) extends for threaded engagement with said tool carrier (30).

12. A mechanism according to claim 11 wherein said clamp screw (38) is axially aligned with said micrometer screw (62).

13. A mechanism according to claim 11 or 12 wherein said collar aperture (40) is defined by a generally conically but convexly curved female surface (42), and wherein said clamp screw (38) is provided with a male conical head undersurface (52) adapted to engage said collar surface (42) along at least part of a circular contact line.

14. A mechanism according to claim 13 wherein said axis of said aperture (40) is offset from the axis of said screw (38) so as to provide screw-collar engagement along only a segment of a curved contact line.

15. A mechanism according to any one of claims 11 to 14 including a hook for securely retaining the tool carrier (30) and insert (22) even under high rotational speed.

16. A mechanism according to any one of the preceding claims wherein said nut (68) is affixed within said carrier (30) rotation of the micrometer screw (62) causing the nut (68) and carrier (30) to be translatably moved in a direction parallel to the aperture axis (A).

17. A fine adjustment cartridge mechanism for a boring machine tool or like device, the cartridge mechanism being adapted for installation in a machine tool boring head cylindrical aperture (13) extending transversely of the longitudinal axis (B) of the machine tool boring head (10), the cartridge mechanism comprising, in combination, a carrier member (30) adapted to be secured within the machine tool boring head aperture (13) in any of a range of positions extending transversely of the machine tool boring head axis of rotation (B), a collar member (36) carrying a tool insert (22) and adapted to be affixed to the tool carrier (30), the collar (36) being at least partly defined by a generally conical convexly curved female surface (42), and a clamp screw (38) adapted to threadably engage the carrier member (30) and being provided with a male conical head undersurface (52) adapted to engage the collar member (36) along at least part of a circular contact line.

18. A mechanism according to claim 17 wherein said axis (C) of said collar aperture (40) is offset from the axis (A) of said screw (38) so as to provide screw-collar engagement along only a segment of a curved contact line.

19. A fine adjustment cartridge mechanism for a boring machine tool or like device, comprising, in combination, a cartridge body (26), a micrometer screw (62) axially aligned with and located at least partially within said body (26), a bearing (80) for interconnecting the body (26) and the micrometer screw (62), and a shear ring (82) functionally interconnecting the body (26) and the bearing (80).

20. A mechanism according to claim 19 wherein said shear ring (82) is formed in situ and includes a resinous epoxy material.

21. A mechanism according to claim 20 wherein said shear ring (82) is formed within generally opposed confronting grooves (84, 86) formed respectively within said cartridge body (26) and said bearing (80).

22. A method of forming a threaded nut (68) for use with a cartridge tool carrier (30) and a micrometer screw (62), the method comprising the steps of fixing an axially extending tool carrier member (30) in a jig, fixing a micrometer screw (62) having a threaded shank in the jig in a location coaxial with and at least partially within the tool carrier member (30), introducing a fluid material inside the tool carrier member (30) and around the threaded micrometer screw shank (62), allowing the fluid to solidify into a threaded nut member (68), and removing the tool carrier (30), nut (68), and micrometer screw (62) assembly from the jig.

23. A method according to claim 22 further including the step of introducing the fluid material inside the tool carrier member (30) through a hole (76) extending radially through the tool carrier member (30).

24. A method of connecting a micrometer screw bearing to a tool cartridge body, the method comprising the steps of fixing a cartridge body (26) in a jig, installing an axial bearing (80) in the cartridge body (26) in a predetermined location, introducing a fluid material into mating recesses (84, 86) formed in the body (26) and bearing (80), allowing the fluid to solidify into a shear ring (82), and removing the cartridge body (26) and axial bearing (80) from the jig.

25. A method according to claim 24 further including the steps of forming a groove in an outer annular surface of the bearing (80) and forming a mating groove in confronting position in the cartridge body (26), the grooves defining the mating recesses in the body (26) and bearing (80).

26. A method of manufacturing a tool carrying cartridge having a cartridge body (26), a bearing (80) and a micrometer screw (62), the method comprising the steps of fixing an axially extending cartridge body (26) in a jig, locating a micrometer screw (62) in the jig in coaxial alignment with the cartridge body (26), installing a bearing (80) between the cartridge body (26) and the micrometer screw (62), introducing a fluid material into an annular recess formed between the bridging the bearing (80) and the cartridge body (26) allowing the fluid to solidify into a shear ring (82), and removing the cartridge body (26), axial bearing (80), shear ring (82) and micrometer screw (62) assembly from the jig.

FIG.1

FIG.2

FIG.3

FIG. 4

FIG. 5

FIG. 6

10

FIG. 7

European Patent
Office

**EUROPEAN SEARCH REPORT**

Application Number

| | DOCUMENTS CONSIDERED TO BE RELEVANT | | EP 91308595.7 |
|---|---|---|---|
| **Category** | **Citation of document with indication, where appropriate, of relevant passages** | **Relevant to claim** | **CLASSIFICATION OF THE APPLICATION (Int. Cl. 5)** |
| X | <u>WO - A1 - 89/11 934</u><br>(CNC-WERKZEUGTECHNOLOGIE<br>PATENTVERWERTUNGS- UND<br>VETRIEBSGESMBH)<br>* Fig. 1-13 * | 1,2 | B 23 B 29/034 |
| A | | 8,15,<br>16,17 | |
| A | <u>US - A - 4 784 536</u><br>(PFALZGRAF)<br>* Fig. 1,2,19,20 * | 1,8,<br>10,11,<br>12,15,<br>16,17 | |
| X | <u>DE - A1 - 3 234 057</u><br>(KOYEMANN WERKZEUGE GMBH)<br>* Fig. 1,2 * | 19 | |
| A | | 1,2,8,<br>16,17 | |
| A | <u>US - A - 4 790 971</u><br>(BROWN)<br>* Fig. 4; abstract; claim 1 * | 22,6 | **TECHNICAL FIELDS SEARCHED (Int. Cl.5)** |
| A | <u>FR - A1 - 2 446 407</u><br>(IRRIFRANCE)<br>* Fig. 1,2; claim 1 * | 24,25,<br>26 | B 23 B 29/00<br>B 21 D 53/00<br>B 22 D 19/00<br>F 16 B 21/00 |
| A | <u>US - A - 4 691 422</u><br>(SKF GLEITLAGER GMBH)<br>* Fig. 1-4; column 2,<br>lines 37-44 * | 24,26,<br>5 | |
| D,A | <u>US - A - 4 398 854</u><br>(PAPE)<br>* Fig. 1-5 * | 1,8,<br>16,17 | |

The present search report has been drawn up for all claims

| Place of search | Date of completion of the search | Examiner |
|---|---|---|
| VIENNA | 15-11-1991 | BRÄUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

               

& : member of the same patent family, corresponding document

EPO FORM 1503 03.82 (P0401)